# EUROPÄISCHE PATENTANMELDUNG

(11) **EP 0 529 599 A1**
(43) Veröffentlichungstag der Anmeldung: **03.03.1993**
(21) Anmeldenummer: 92114525.6
(22) Anmeldetag: 26.08.1992
(51) Int. Cl.: C04B 35/58

(54) **Silicium-Schlickergiessmasse und Verfahren zu ihrer Herstellung**

(30) Priorität: 28.08.1991 DE 4128496
(71) Anmelder: Hoechst CeramTec Aktiengesellschaft, D-95100 Selb (DE)
(72) Erfinder: Dillinger, Reinhard, Dr., W-8672 Selb (DE); Heinrich, Jürgen, Dr., W-8672 Selb (DE)
(74) Vertreter: Hoffmann, Peter, Dipl.-Chem.

(57) **Zusammenfassung**

Es wird eine Siliciumschlickergießmasse aus 25 bis 50 Gew.-% Wasser und einem pulverförmigen Feststoffanteil, der im wesentlichen aus Silicium und anorganischen Sinterhilfsmitteln besteht, beschrieben, wobei die wäßrige Phase einen pH-Wert im Bereich von 8 bis 9,5 aufweist.
Der Feststoffanteil besteht aus
65 bis 88 Gew.-% Silicium,
5 bis 24 Gew.-% Y₂O₃,
2 bis 9,6 Gew.-% Al₂O₃ und
1 bis 5 Gew.-% SiO₂ auf der Oberfläche der Si-Partikel.
Die mittlere Korngröße des Feststoffanteils liegt bei maximal 20 µm, insbesondere bei maximal 5 µm. Zur Erfindung gehört auch ein Verfahren zur Herstellung der Schlickergießmasse.

## Beschreibung

Die Erfindung betrifft eine wäßrige Schlicker-Gießmasse, die anorganische Sinterhilfsmittel, ein gelöstes Silikat und einen hohen Anteil Siliciumdioxid auf den einzelnen Silicium-Partikeln enthält.

Siliciumnitrid, Si₃N₄, ist aufgrund seiner hervorragenden Eigenschaften - hohe mechanische Festigkeit, Härte, Korrosions-, Oxidations- und Thermoschockbeständigkeit - ein wichtiger Werkstoff für zahlreiche Anwendungen im Maschinenbau.

Bei der Herstellung von Bauteilen aus Si₃N₄-Keramik kann man prinzipiell zwei Wege unterscheiden: die Herstellung von Grünkörpern aus Si₃N₄-Pulver mit Sinteradditiven und nachfolgende Sinterung sowie die Herstellung von Grünkörpern aus pulverförmigem elementarem Silicium mit Sinteradditiven, anschließende Nitridierung zum sogenannten RBSN (reaction bonded silicon nitride) und nachfolgender heißisostatischer Nachverdichtung. Die hier vorgestellte Erfindung bezieht sich auf den Weg über das RBSN.

Als Formgebungsprozeß zur Herstellung von Grünteilen aus Silicium-Pulver wurden bisher vor allem das isostatische Pressen und das Spritzgießen eingesetzt, während das in der konventionellen Keramik sehr verbreitete Verfahren des Schlickergießens kaum zum Einsatz kam. Bei dieser Technik wird eine Feststoff-Flüssigkeits-Dispersion in ein poröses Formenmaterial, meist Gips, gegossen. Die poröse Form entzieht der Suspension die flüssige Phase und es entsteht ein fester Grünkörper von ausreichender Festigkeit für die weitere Verarbeitung. Die Vorteile des Schlickergießens gegenüber anderen Methoden liegen auf der Hand: relativ komplex gestaltete Bauteile können unter Verwendung billiger, leicht herstellbarer Gipsformen gegossen werden, in vielen Fällen kann Wasser als Dispergiermedium verwendet werden und homogene Abgüsse mit hohen Gründichten sind erreichbar.

Das Schlickergießen als Formgebungsverfahren für elementares Silicium ist bereits bekannt.
- Ezis et al., Am. Ceram. Soc. Bull 62 (1983) p. 607 untersuchten die Parameter und das Verhalten von Silicium-Schlickern. Auch sie schlugen einen Alterungsprozeß für das Silicium-Pulver zur Erzielung eines gasfreien Schlickers vor. Im pH-Bereich von 6,5 bis 9 konnten Schlicker niedriger Viskosität und hoher Gründichte erzielt werden. Es wurde ein alkalischer Verflüssiger eingesetzt; der gewünschte pH-Wert wurde mit Salpetersäure oder Ammoniak eingestellt.
- I.Y. Guzman et al., Refractories 10 (1976) p. 56, fanden, daß Silicium-Schlicker ein steiles Viskositätsminimum bei einem pH-Wert von 5 und ein breiteres im Bereich von 9 - 10 aufweisen. Die höchsten Dichten wurden im alkalischen Bereich festgestellt. Ammoniak diente zur pH-Wert-Einstellung, als Verflüssiger kam ein Polyvinylalkohol zum Einsatz.

Die eingesetzten wäßrigen Schlicker enthielten als feste Phase jedoch nur Silicium-Pulver und keine anorganischen Sinterhilfselemente. Damit konnten aus ihnen lediglich Bauteile aus RBSN hergestellt werden, die nicht nachverdichtbar sind und aufgrund ihrer Restporosität von ca. 20 bis 30 % eine relativ niedrige Festigkeit (Biegebruchfestigkeit maximal 250 MPa) aufweisen.

Zur Herstellung von hochfesten Keramiken auf Siliciumnitridbasis muß eine heißisostatische Nachverdichtung der Bauteile zur Beseitigung der Restporosität erfolgen. Dieser Prozeß erfordert den Zusatz von Sinterhilfsmitteln, in der Regel Gemische aus Oxiden der Seltenen Erden und Aluminium bzw. Magnesiumoxid. Pulver dieser Sinteradditive werden deshalb vor der Nitridierung dem Silicium beigemischt. Die bei der Dispergierung einer Mischung aus Silicium-Pulver und der pulverförmigen Sinterhilfsmittel Yttriumoxid und Aluminiumoxid in Wasser auftretenden Schwierigkeiten wurden bereits in mehreren Publikationen z.B. in Angew. Chem. Adv. Mater. 101 (1989) p. 1592 beschrieben:
- Bei pH-Werten pH > 8 findet bei unvorbehandelten Pulvern Hydrolyse statt, wobei die Gasentwicklung mit steigendem pH-Wert stark zunimmt.
- Die Oberflächenladung der Silicium-Teilchen in wäßriger Lösung ist bei pH > 2 negativ, die Oberflächenladungen unbehandelter Al₂O₃-Pulver dagegen bis zu einem pH-Wert von ca. 8 positiv (isoelektrischer Punkt in beiden Fällen zwischen pH 8 und pH 9), das heißt, bei pH < 8 findet man starke Flocculation.
- Die Löslichkeit von Y₂O₃ steigt mit sinkendem pH-Wert. Bei pH < 8 reicht die Konzentration an Y³⁺-Ionen aus, um eine starke Flocculation der Suspension hervorzurufen.
- Sowohl das Silicium-Pulver, als auch die Pulver der Sinteradditive beeinflussen den pH-Wert der Suspension durch Oberflächenreaktionen (bei pH > 10 findet man bei allen genannten Pulvern einen Verbrauch an Hydroxylionen).

Insbesondere ist aus Mat. Science and Engn. A 109 (1988) p. 373 bekannt, Silicium-Schlicker-Gießmassen einzusetzen, die Wasser, Rest Silicium, Aluminiumoxid und Y₂O₃ in Pulverform und ein organisches Dispergiermittel (= Polyanion) sowie ein wasserlösliches Silikat enthalten. Es wird angegeben, daß Schlicker mit besonders niedriger Viskosität im pH-Bereich > 7,5 erhältlich sind. Handelsübliche Siliciumpulver weisen nach dieser Stelle 1,5 bis 2 Gew.-% SiO₂ an der Oberfläche auf.

Nachteilig an diesem Verfahren ist, daß feinverteiltes Silicium durch Alkalien unter Wasserstoffentwicklung angegriffen wird und die eingesetzten Dispersionen nur kurze Zeit stabil sind.

Es wurde nun eine wäßrige Silicium-Schlickergießmasse gefunden, die neben Silicium Y₂O₃- und Aluminiumoxid-Feststoffanteilen, ggf. zusätzlich in gelöster Form noch 0,2 bis 1 Gew.-% organisches Dispergiermittel und Silikat enthalten kann, und deren Kennzeichenmerkmale darin zu sehen sind, daß diese Masse
25 bis 50 Volumen-% Wasser enthält und der Feststoffanteil aus
65 bis 88 Gew.-% Silicium,
5 bis 24 Gew.-% Y₂O₃,
2 bis 9,6 Gew.-% Al₂O₃ und
1 bis 5 Gew.-% SiO₂ auf der Oberfläche der Silicium-Partikel besteht, bezogen jeweils auf die Summe von 100 Gew.-% Feststoffanteil, und einen pH-Wert von 8 bis 9,5 aufweist. Die mittlere Korngröße des Feststoffanteils beträgt maximal 20 µm und insbesondere maximal 5 µm.

Die Anteile an Y₂O₃ und Aluminiumoxid wirken als Sinterhilfsmittel und ermöglichen eine heißisostatische Nachverdichtung von Bauteilen zur Beseitigung der Restporosität. In dem angegebenen pH-Bereich von 8 bis 9,5 sind wäßrige Dispersionen von Silicium, insbesondere wenn dieses oberflächlich oxidiert ist, zufriedenstellend stabil.

Aus R. Dillinger et al. Mat. Science and Engineering A 109 (1988) Seite 373 sind ähnliche Silicium-Schlickergießmassen mit einem pH-Wert von 7,5 bis 9,0 sowie Gehalten an Y₂O₃ und Aluminiumoxid bekannt. Das eingesetzte Siliciumpulver weist einen SiO₂-Anteil von etwa 1,5 bis 2 % auf. Es fehlen jedoch genauere Angaben bezüglich der Mengen der einzelnen Bestandteile.

Die Erfindung betrifft ferner die Herstellung einer keramischen Schlickergießmasse mit der angegebenen Zusammensetzung. Die Herstellung beruht auf der Beobachtung, daß man Siliciumpulver in Gegenwart von Sauerstoff an der Oberfläche der Partikel oxidieren kann, und damit eine Passivierung erreicht.

Nach einem Verfahren zur Herstellung der Schlickergießmasse wird ein Gemisch aus 66 bis 93 Gew.-Teilen pulverförmigem Silicium, 5 bis 24 Gew.-Teilen Y₂O₃ und 2 bis 9,6 Gew.-Teilen Al₂O₃ gemahlen, bis eine mittlere Korngröße von höchstens 20 µm, vorzugsweise 5 µm erreicht ist, dann wird das gemahlene Pulvergemisch für mindestens 12 Stunden in Luft auf eine Temperatur von 200 bis 300°C aufgeheizt, daneben wird eine wäßrige Lösung bereitet, die einen pH-Wert zwischen 11 und 13 aufweist, dann wird das gemahlene Pulvergemisch in diese wäßrige Lösung eingerührt und anschließend der Ansatz durch Evakuieren von Luft befreit.

Das Siliciumpulver soll nicht in Wasser gemahlen werden, da die dabei geschaffenen frischen Oberflächen rasch hydrolisieren würden. Möglich ist eine Naßmahlung in einem nicht wäßrigen Lösungsmittel, beispielsweise Isopropanol. Bewährt hat sich das Mahlen in einer Kugelmühle unter Zusatz von Aluminiumoxid-Kugeln. Bei dieser Naßmahlung der Silicium/Y₂O₃/Al₂O₃-Pulvermischung reichen Mahldauern zwischen 12 Stunden und 48 Stunden aus. Anschließend wird das Dispergiermedium (Isopropanol) entfernt.

Möglich ist auch eine Trockenmahlung der genannten Pulvermischung, beispielsweise in einer Kugelmühle. Dabei haben sich Anteile von 0,1 % Isopropanol als Antiagglomerationsmittel bewährt. Auch hier reichen Mahldauern zwischen 12 Stunden und 48 Stunden aus. Durch das Mahlen wird einerseits eine Homogenisierung der Feststoffanteile erreicht und andererseits das Primärkorn des Ausgangspulvers zerkleinert. Versuche haben ergeben, daß mit zunehmender Vormahldauer eine steigende Bauteilfestigkeit von heißisostatisch nachverdichteten Baukörpern resultiert.

Durch Ausheizen der gemahlenen Pulvermischungen wird (im Falle der Naßmahlung) das flüssige Dispergiermedium restlos entfernt. Dies ist vorteilhaft für eine gute Beständigkeit der hergestellten Dispersionen. Ferner wird durch die thermische Behandlung das Silicium-Ausgangspulver an der Oberfläche der Partikel oxidiert, sein Sauerstoffgehalt also erhöht. Es hat sich gezeigt, daß der pH-Wert, ab dem sich unter alkalischen Bedingungen die Hydrolyse des Siliciums bemerkbar macht, vom Sauerstoffgehalt des Pulvers und damit von der Stärke der SiO₂-Oberflächenschicht auf den Si-Pulverteilchen abhängt. Während unbehandeltes Silicium-Pulver mit Wasser bereits bei pH 7 Wasserstoff bildet, ist das erfindungsgemäß thermisch behandelte Pulver überraschend bis zu einem pH-Wert von 10 gegenüber Hydrolyse stabil.

Das Einstellen des pH-Werts der wäßrigen Lösung auf 11 bis 13 geschieht mit Hilfe einer Base. Verwendbar sind beispielsweise organische Basen, Natriumcarbonat oder Alkalihydroxid. Bevorzugt sind lösliche Silikate. Die Base soll in einer Menge zugesetzt werden, daß auch nach dem Vereinigen mit dem Silicium-Pulver der pH-Wert nicht unter 8,0 sinkt. Es ist ferner von Vorteil, wenn diese Ausgangslösung ein Dispergiermittel, insbesondere auf Basis eines organischen Polymeren enthält. Verwendbar sind beispielsweise Alkylsulfonate, Alkylbenzolsulfonat, Fettsäurekondensationsprodukte mit aminogruppenhaltigen Körpern, Phosphorsäureester von Fettalkoholen oder Polyacrylat.

Nach dem Einrühren des Silicium-Pulvers (einschließlich anorganischer Dotierstoffe) in die wäßrige Lösung sinkt der pH-Wert rasch auf 8,0 bis 9,5. Bewährt haben sich wäßrige Lösungen, die 0,2 bis 1 Gew.-% eines organischen Dispergiermittels plus Silikat enthalten. Die Rührdauer beträgt vorzugsweise mindestens 12 Stunden.

Um die beim Anrühren der Dispersion entstehenden groben Agglomerate (an der Schlickeroberfläche am Gefäßrand antrocknender Schlicker) zu entfernen, ist es vorteilhaft, den Schlicker zu sieben. Bewährt haben sich Siebe mit einer maximalen Maschenweite von 200 µm.

Beim Anrühren des Ansatzes und beim Sieben kann Luft in den Schlicker geraten. Eingeschlossene Luftblasen können die Qualität des fertigen Bauteils erheblich beeinträchtigen. Um Luftblasen aus dem Schlicker zu entfernen, kann man ihn, am besten unmittelbar vor dem Vergießen, evakuieren.

Bei einem weiteren Verfahren zur Herstellung der Gießmasse findet das Mahlen in Abwesenheit der anorganischen Dotierstoffe statt. Dieses Verfahren ist dadurch gekennzeichnet, daß man pulverförmiges Silicium mahlt, bis eine mittlere Korngröße von höchstens 20 µm, insbesondere höchstens 5 µm erreicht ist, man das gemahlene Silicium für mindestens 12 Stunden in Luft auf eine Temperatur von 200 bis 300°C aufheizt, man das Silicium (gegebenenfalls nach Abkühlen) mit Y₂O₃ und Al₂O₃ versetzt, bis ein Gemisch vorliegt, das aus 66 bis 93 Gew.-% an der Oberfläche der Partikel oxidiertem Silicium, 5 bis 24 Gew.-% Y₂O₃ und 2 bis 9,6 Gew.-% Al₂O₃ besteht, man eine wäßrige Lösung bereitet, die einen pH-Wert zwischen 12 und 13 aufweist, man das gemahlene Siliciumpulver nebst anorganischen Dotierstoffen in die wäßrige Lösung einrührt und anschließend evakuiert.

Bei einer anderen Ausgestaltung des erfindungsgemäßen Verfahrens erfolgt der beschriebene Mahlvorgang in Gegenwart der Sinterhilfsmittel. Man bereitet also zunächst eine Mischung aus 66 - 93 Gew.-% pulverförmigem Silicium, 5 - 24 Gew.-% Y₂O₃ und 2 bis 9,6 Gew.-% Al₂O₃, mahlt bis eine Korngröße von maximal 20 µm, insbesondere maximal 5 µm, erreicht ist, und erhitzt für mindestens 12 Stunden in Luft auf eine Temperatur von 200 bis 300°C, um das Silicium an der Oberfläche der Partikel zu oxidieren. Anschließend wird in einer Kugelmühle mit einer wäßrigen alkalischen Lösung von pH 11 - 12 unter Zusatz von Al₂O₃-Kugeln gemahlen.

Nach einer weiteren Ausgestaltung des erfindungsgemäßen Verfahrens wird handelsübliches Siliciumpulver (Korngröße maximal 30 µm) zunächst ohne Mahlen für mindestens 12 Stunden an Luft auf eine Temperatur von 200 - 300°C erhitzt. Dann vermischt man mit Y₂O₃ und Al₂O₃, so daß ein Gemisch entsteht, das aus 60 - 93 Gew.-% an der Oberfläche der Partikel oxidiertem Silicium, 5 - 24 Gew.-% Y₂O₃ und 2 bis 9,6 Gew.-% Al₂O₃ besteht. Dieses Gemisch wird in einer Kugelmühle mit einer wäßrigen alkalischen Lösung von pH 11 bis 12 unter Zusatz von Al₂O₃-Kugeln gemahlen.

Auf diese Weise ergibt sich eine Beschleunigung der Einstellung des gewünschten End-pH-Wertes bei gleichzeitiger sehr guter Desagglomerierung der Pulvermischung. Der Schlicker ist bei diesem Verfahren nach einer Mahldauer von 2,5 h verarbeitungsbereit. Um eine Zerstörung der thermisch erzeugten Passivierungsschicht zu vermeiden, muß diese Mahlung bei niedriger Umdrehungszahl erfolgen. Auch eine Mahldauer, die deutlich über 2,5 h hinausgeht, kann zu einer Zerstörung der Passivierungsschicht führen.

Der fertige Schlicker kann zur Herstellung eines Formkörpers in eine Gipsform eingegossen werden. Es ist vorteilhaft, die verwendete Gipsform für kurze Zeit, z.B. 5 bis 60 Sekunden mit einer ca. 0,5 %igen wäßrigen Lösung von Ammoniumalginat zu behandeln. Dadurch wird die Scherbenbildungsrate etwas verringert, die Oberflächenqualität der Gießlinge verbessert, das Eindringen von Feinanteil des Pulvers in die Gipsform verhindert und die korrosive Aufrauhung der Gipsform unterdrückt.

Die Standzeit der Schlickermasse in der Gipsform zur Bildung eines Scherbens hinreichender Wandstärke beträgt je nach gewünschter Wandstärke zwischen 10 Minuten und 45 Minuten. Danach wird überschüssiger Schlicker entfernt. Die Entformung des fertigen Grünkörpers kann nach spätestens 2 Stunden erfolgen. Die entstandenen Grünlinge können durch Nitridieren und anschließende heißisostatische Nachverdichtung zu Siliciumnitrid-Körpern mit hervorragenden Festigkeiten weiter verarbeitet werden.

## Patentansprüche

1. Siliciumschlickergießmasse aus 25 bis 50 Gew.-% Wasser und einem pulverförmigen Feststoffanteil, der im wesentlichen aus Silicium und anorganischen Sinterhilfsmitteln besteht, wobei die wäßrige Phase einen pH-Wert im Bereich von 8 bis 9,5 aufweist, dadurch gekennzeichnet, daß der Feststoffanteil aus
65 bis 88 Gew.-% Silicium,
5 bis 24 Gew.-% Y₂O₃,
2 bis 9,6 Gew.-% Al₂O₃,
1 bis 5 Gew.-% SiO₂ auf der Oberfläche der Si-Partikel besteht, und daß die mittlere Korngröße des Feststoffanteils bei maximal 20 µm, insbesondere bei maximal 5 µm liegt.

2. Schlickergießmasse gemäß Anspruch 1, dadurch gekennzeichnet, daß sie zusätzlich ein gelöstes Silikat enthält.

3. Schlickergießmasse gemäß Anspruch 1, dadurch gekennzeichnet, daß sie zusätzlich ein organisches Dispergiermittel in gelöster Form enthält.

4. Schlickergießmasse gemäß Anspruch 3, dadurch gekennzeichnet, daß sie 0,2 bis 1 Gew.-% organische Dispergiermittel plus Silikat (= Summe) enthält.

5. Verfahren zur Herstellung einer keramischen Schlickergießmasse gemäß Anspruch 1, dadurch gekennzeichnet, daß man ein Gemisch aus 66 bis 93 Gew.-Teilen pulverförmigem Silicium, 5 bis 24 Gew.-Teilen Y₂O₃ und 2 bis 9,6 Gew.-Teilen Al₂O₃ mahlt bis eine mittlere Korngröße von höchstens 20 µm, insbesondere höchstens 5 µm, erreicht ist, man das gemahlene Pulvergemisch für mindestens 12 Stunden in Luft auf eine Temperatur von 200 bis 300°C aufheizt, man eine wäßrige Lösung bereitet, die einen pH-Wert zwischen 11 und 13 aufweist, man das gemahlene Pulvergemisch in die wäßrige Lösung einrührt und anschließend evakuiert.

6. Verfahren gemäß Anspruch 5, dadurch gekennzeichnet, daß man den pH-Wert zwischen 11 und 13 durch Zusatz eines löslichen Silikates, insbesondere eines Alkalisilikates, einstellt.

7. Verfahren gemäß Anspruch 6, dadurch gekennzeichnet, daß die wäßrige Lösung mit pH 11 bis 13 zusätzlich ein polymeres organisches Dispergiermittel enthält.

8. Verfahren gemäß einem der Ansprüche 5 bis 7, dadurch gekennzeichnet, daß man einen Anteil an löslichem Silikat und löslichem Dispergiermittel von 0,2 bis 1 Gew.-% einstellt.

9. Verfahren gemäß Anspruch 5, dadurch gekennzeichnet, daß man das pulverförmige Gemisch trocken mahlt.

10. Verfahren gemäß Anspruch 5, dadurch gekennzeichnet, daß man das pulverförmige Gemisch in einem nicht-wäßrigen Lösungsmittel mahlt und dann das Lösungsmittel entfernt.

11. Verfahren zur Herstellung einer keramischen Schlickergießmasse gemäß Anspruch 1, dadurch gekennzeichnet, daß man pulverförmiges Silicium mahlt, bis eine mittlere Korngröße von höchstens 20 µm, insbesondere höchstens 5 µm, erreicht ist, man das gemahlene Pulver für mindestens 12 Stunden in Luft auf eine Temperatur von 200 bis 300°C aufheizt, man das Pulver, gegebenenfalls nach Abkühlen, mit Y₂O₃ und Al₂O₃ versetzt, bis ein Gemisch vorliegt, das aus 66 bis 93 Gew.-% an der Oberfläche der Partikel oxidiertem Silicium, 5 bis 24 Gew.-% Y₂O₃ und 2 bis 9,6 Gew.-% Al₂O₃ besteht, man eine wäßrige Lösung bereitet, die einen pH-Wert zwischen 11 und 13 aufweist, man das gemahlene Siliciumpulver nebst anorganischen Dotierstoffen in die wäßrige Lösung einrührt und anschließend evakuiert.

## Patentansprüche (Patentansprüche für folgende(n) Vertragsstaat(en): ES)

1. Verfahren zur Herstellung einer keramischen Schlickergießmasse aus
25 bis 50 Gew.-% wäßriger Phase mit einem pH-Wert im Bereich von
8 bis 9,5 und einem pulverförmigen Feststoffanteil aus
65 bis 88 Gew.-% Silicium,
5 bis 24 Gew.-% Y₂O₃,
2 bis 9,6 Gew.-% Al₂O₃ und
1 bis 5 Gew.-% SiO₂ auf der Oberfläche der Si-Partikel,
wobei die mittlere Korngröße des Feststoffanteils bei maximal 20 µm, insbesondere bei maximal 5 µm liegt, bei dem man ein Gemisch aus 66 bis 93 Gew.-Teilen pulverförmigem Silicium, 5 bis 24 Gew.-Teilen Y₂O₃ und 2 bis 9,6 Gew.-Teilen Al₂O₃ mahlt bis eine mittlere Korngröße von höchstens 20 µm, insbesondere höchstens 5 µm, erreicht ist, man das gemahlene Pulvergemisch für mindestens 12 Stunden in Luft auf eine Temperatur von 200 bis 300°C aufheizt, man eine wäßrige Lösung bereitet, die einen pH-Wert zwischen 11 und 13 aufweist, man das gemahlene Pulvergemisch in die wäßrige Lösung einrührt und anschließend evakuiert.

2. Verfahren gemäß Anspruch 1, dadurch gekennzeichnet, daß man den pH-Wert zwischen 11 und 13 durch Zusatz eines löslichen Silikates, insbesondere eines Alkalisilikates, einstellt.

3. Verfahren gemäß Anspruch 2, dadurch gekennzeichnet, daß die wäßrige Lösung mit pH 11 bis 13 zusätzlich ein polymeres organisches Dispergiermittel enthält.

4. Verfahren gemäß einem der Ansprüche 1 bis 3, dadurch gekennzeichnet, daß man einen Anteil an löslichem Silikat und löslichem Dispergiermittel von 0,2 bis 1 Gew.-% einstellt.

5. Verfahren gemäß Anspruch 1, dadurch gekennzeichnet, daß man den durch Einrühren in die wäßrige Lösung erhaltenen Schlicker durch ein Sieb der maximalen Maschenweite von 200 µm absiebt.

6. Verfahren gemäß Anspruch 1, dadurch gekennzeichnet, daß man das pulverförmige Gemisch trocken mahlt.

7. Verfahren gemäß Anspruch 1, dadurch gekennzeichnet, daß man das pulverförmige Gemisch in einem nicht-wäßrigen Lösungsmittel mahlt und dann das Lösungsmittel entfernt.

8. Verfahren zur Herstellung einer keramischen Schlickergießmasse aus
25 bis 50 Gew.-% wäßriger Phase mit einem pH-Wert im Bereich von
8 bis 9,5 und einem pulverförmigen Feststoffanteil aus
65 bis 88 Gew.-% Silicium,
5 bis 24 Gew.-% Y₂O₃,
2 bis 9,6 Gew.-% Al₂O₃ und
1 bis 5 Gew.-% SiO₂ auf der Oberfläche der Si-Partikel,
bei dem man pulverförmiges Silicium mahlt, bis eine mittlere Korngröße von höchstens 20 µm, insbesondere höchstens 5 µm, erreicht ist, man das gemahlene Pulver für mindestens 12 Stunden in Luft auf eine Temperatur von 200 bis 300°C aufheizt, man das Pulver, gegebenenfalls nach Abkühlen, mit Y₂O₃ und Al₂O₃ versetzt, bis ein Gemisch vorliegt, das aus 66 bis 93 Gew.-% an der Oberfläche der Partikel oxidiertem Silicium, 5 bis 24 Gew.-% Y₂O₃ und 2 bis 9,6 Gew.-% Al₂O₃ besteht, man eine wäßrige Lösung bereitet, die einen pH-Wert zwischen 11 und 13 aufweist, man das gemahlene Siliciumpulver nebst anorganischen Dotierstoffen in die wäßrige Lösung einrührt und anschließend evakuiert.
